# EUROPEAN PATENT APPLICATION

(11) **EP 3 561 987 A1**
(43) Date of publication of application: **30.10.2019**
(21) Application number: 18185651.9
(22) Date of filing: 26.07.2018
(51) Int. Cl.: H02J 3/38

(54) **SOLAR MODULE JUNCTION BOX, SOLAR SYSTEM AND CONTROL METHOD FOR SOLAR MODULE**

(30) Priority: 28.04.2018 CN 201810402227; 28.04.2018 CN 201820639106 U
(71) Applicant: Beijing Hanergy Solar Power Investment Co., Ltd., 101499 Beijing (CN)
(72) Inventor: Liu, An, Beijing, Beijing 101499 (CN); Li, Hongje, Beijing, Beijing 101499 (CN); Xu, Dong, Beijing, Beijing 101499 (CN)
(74) Representative: Cohausz & Florack

(57) **Abstract**

A solar module junction box (100), a solar system (200) and a control method for solar module are provided, the solar module junction box (100) comprising: a state detection module (2), a controller (3) and a power module (4); the state detection module (2) is connected to the controller (3), the controller (3) is connected to the power module (4); the state detection module (2) is configured to detect a state of a solar module (5) and transmit a state detection data to the controller (3), the controller (3) is configured to acquire the state detection data, generate a switch-off control signal when the state detection data is abnormal, and transmit the switch-off control signal to the power module (4), the power module (4) is configured to adjust an output voltage to be within a preset low voltage range after receiving the switch-off control signal.

## Description

### TECHNICAL FIELD

The present application relates to, without being limited to, a solar module junction box, a solar system and a control method for solar module.

### BACKGROUND

With the development of distributed generation system, its application in household appliances and building integrated PV (BIPV) has increased. Therefore, the requirements for safety and reliability of distributed generation system have become higher and higher. However, the conventional solar module junction boxes cannot be safely switched off in harsh environments such as fire and various other natural disasters, resulting in safety hazards.

### SUMMARY

The following is a general description of the subject matter, which will be described herein later in detail. The general description is not intended to limit the scope of the claims.

The present application provides a solar module junction box, a solar system, and a control method for solar module that can achieve safe switch-off of solar modules so as to ensure personnel safety.

According to a first aspect of the present application, there is provided a solar module junction box comprising:
a state detection module, a controller and a power module;
the state detection module is connected to the controller, the controller is connected to the power module;
the state detection module is configured to detect a state of a solar module and transmit a state detection data to the controller, the controller is configured to acquire the state detection data, generate a switch-off control signal when the state detection data is abnormal, and transmit the switch-off control signal to the power module, the power module is configured to adjust an output voltage to be within a preset low voltage range after receiving the switch-off control signal.

In an exemplary embodiment, the controller is configured to, after acquiring the state detection data, compare the state detection data with a preset state threshold, and generate the switch-off control signal if the state detection data is greater than the preset state threshold.

In an exemplary embodiment, the solar module junction box may further include: a wireless communication module, which is connected to the controller;
the controller is configured to, after receiving a remote switch-off control instruction through the wireless communication module, generate the switch-off control signal and transmit the switch-off control signal to the power module.

In an exemplary embodiment, the state detection module may include one or more of following circuits: a temperature detection circuit, a voltage detection circuit, and a current detection circuit;
the temperature detection circuit is configured to detect a temperature of the solar module and transmit the detected temperature data to the controller, the controller being configured to acquire the temperature data, generate the switch-off control signal when the temperature data is abnormal, and transmit the switch-off control signal to the power module;
the voltage detection circuit is configured to detect a voltage output by the solar module and transmit the detected voltage data to the controller, the controller being configured to acquire the voltage data, generate the switch-off control signal when the voltage data is abnormal, and transmit the switch-off control signal to the power module;
the current detection circuit is configured to detect a current output by the solar module and transmit the detected current data to the controller, the controller is configured to acquire the current data, generate the switch-off control signal when the current data is abnormal, and transmit the switch-off control signal to the power module.

In an exemplary embodiment, the controller is configured to, after acquiring the temperature data, compare the temperature data with a preset temperature threshold, and generate the switch-off control signal if the temperature data is greater than the preset temperature threshold;
the controller is configured to, after acquiring a voltage data, compare the voltage data with a preset voltage threshold, and generate the switch-off control signal if the voltage data is greater than the preset voltage threshold;
the controller is configured to, after acquiring the current data, compare the current data with a preset current threshold, and generate the switch-off control signal if the current data is greater than the preset current threshold.

In an exemplary embodiment, the solar module junction box may further include: a power supply module;
the power supply module is configured to acquire a power output by the solar module and supply power to the controller.

In an exemplary embodiment, the low voltage range may be from 0 V to 24 V.

According to a second aspect of the present application, there is provided a solar system including:
at least one solar controller and a plurality of solar module junction boxes according to the first aspect, the solar module junction boxes being correspondingly connected to the solar modules;
the solar module junction boxes is connected to the solar controller in a wired manner, and the number of solar module junction boxes connected to each solar controller does not exceed a preset number corresponding to the wired manner; and/or
the solar module junction boxes is connected to the solar controller in a wireless manner, and the number of solar module junction boxes connected to each solar controller does not exceed a preset number corresponding to the wireless manner.

In an exemplary embodiment, the solar system may further comprise:
a plurality of gateways, each of the gateways being connected to the solar controller in a wired and/or wireless manner;
wherein the solar module junction boxes are connected to the solar controller via the respective gateways through a wired manner, and a number of solar module junction boxes connected by each of the gateways does not exceed a wired connection capacity of the gateway; and/or
the solar module junction boxes are connected to the solar controller via the respective gateways through a wireless manner, and a number of solar module junction boxes connected by each of the gateways does not exceed a wireless connection capacity of the gateway.

According to a third aspect of the present application, there is provided a control method for solar module including:
acquiring a state detection data of a solar module;
generating a switch-off control signal when the state detection data is abnormal;
transmitting the switch-off control signal to the power module such that the power module adjusts an output voltage to be within a preset low voltage range after receiving the switch-off control signal.

In an exemplary embodiment, before generating a switch-off control signal, the method may further include:
comparing the state detection data with a preset state threshold, if the state detection data is greater than a preset state threshold, the state detection data is abnormal;
accordingly, if the state detection data is greater than a preset threshold, generating the switch-off control signal.

In an exemplary embodiment, the method may further include:
wirelessly receiving a remote switch-off control instruction;
generating the switch-off control signal after wirelessly receiving the remote switch-off control instruction.

In an exemplary embodiment, generating the switch-off control signal may include:
the state detection data being a temperature data output by the solar module, generating the switch-off control signal when the temperature data is abnormal;
and/or
the state detection data being a voltage data output by the solar module, generating the switch-off control signal when the voltage data is abnormal;
and/or
the state detection data being a current data output by the solar module, generating the switch-off control signal when the current data is abnormal.

In an exemplary embodiment, comparing the state detection data with the preset state threshold and generating the switch-off control signal may include:
the state detection data being a temperature data output by the solar module, comparing the temperature data with a preset temperature threshold; generating the switch-off control signal if the temperature data is greater than the preset temperature threshold;
and/or
the state detection data being a voltage data output by the solar module, comparing the voltage data with a preset voltage threshold; generating the switch-off control signal if the voltage data is greater than the preset voltage threshold;
and/or
the state detection date being a current data output by the solar module, comparing the current data with a preset current threshold; generating the switch-off control signal if the current data is greater than the preset current threshold.

In an exemplary embodiment, the low voltage range may be from 0 V to 24 V.

Other aspects of the present application can be appreciated upon reading and understanding the accompanying drawings and detailed description.

### BRIEF DESCRIPTION OF THE DRAWINGS

In order to describe the technical solution of the present application more clearly, the drawings used in the description of the embodiments or the prior art will be briefly described. Obviously, the drawings in the following description are merely some embodiments of the present application. To those of ordinary skill in the art, other drawings can also be obtained without creative work from these drawings.
FIG. 1 is a structural schematic diagram showing an exemplary solar system;
FIG. 2 is a structural block diagram showing an exemplary solar module junction box of the present application;
FIG. 3 is a structural block diagram showing another exemplary solar module junction box of the present application;
FIG. 4 is a structural block diagram showing yet another exemplary solar module junction box of the present application;
FIG. 5 is a structural schematic diagram showing an exemplary solar system of the present application;
FIG. 6 is a structural schematic diagram showing another exemplary solar system of the present application;
FIG. 7 is a structural schematic diagram showing yet another exemplary solar system of the present application;
FIG. 8 is a flow chart showing an exemplary control method for solar module of the present application;
FIG. 9 is a flow chart showing another exemplary control method for solar module of the present application;
FIG. 10 is a flow chart showing yet another exemplary control method for solar module of the present application.

### Detailed Description

To make the purpose, technical solutions, and advantages of the present application clearer, the technical solutions of the present application are clearly and completely described herein with reference to the accompanying drawings. Obviously, the embodiments described herein are only a part of not all of the embodiments of the present application. All other embodiments obtained by those of ordinary skill in the art based on the embodiments described herein of the present application without creative work shall fall within the protection scope of the present application.

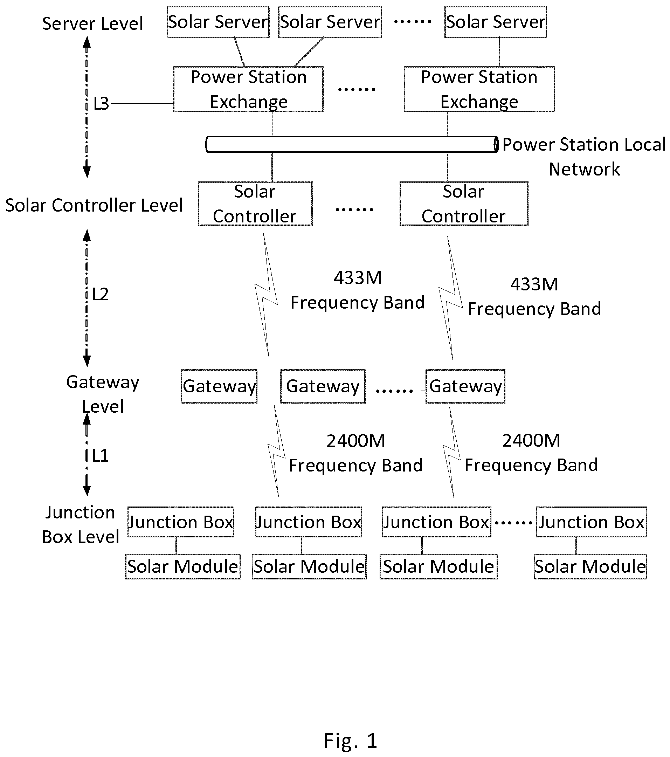

FIG. 1 shows a solar system. The communication of the solar system is divided into four levels: junction box level, gateway level, solar controller level and server level. The junction box communicates wirelessly with the gateway through the 2.4G frequency band. A gateway can access hundreds of junction boxes, with a distance from the junction boxes ranging from 20 to 30 meters. The gateway communicates wirelessly with a solar controller using the 433M frequency band. A gateway can access at least 10 relays, with a communication distance within 1 kilometer. The solar controller communicates with the solar server through Ethernet or a wireless manner such as 4G. The solar system shown in FIG. 1 can group thousands of solar modules into a solar server.

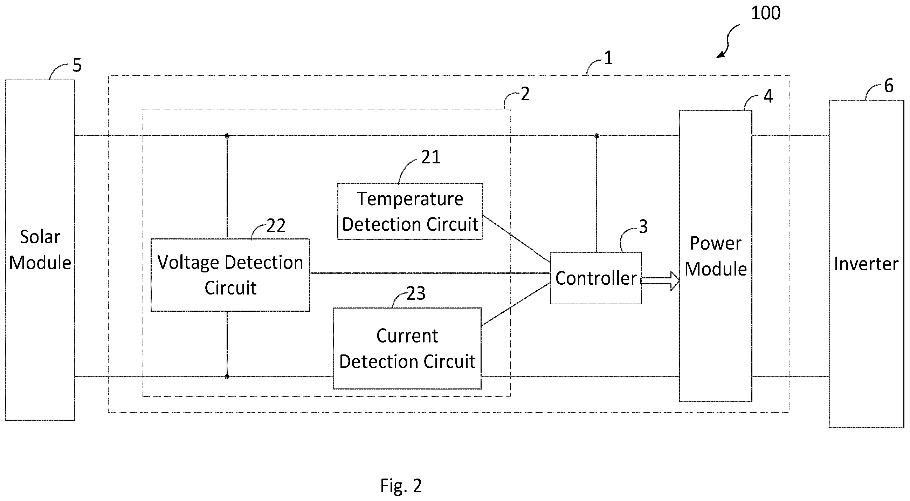

In the first exemplary embodiment, as shown in FIG. 2, the present disclosure provides a solar module junction box 100 for connecting a solar module 5 and outputting power. The solar module 5 includes a thin film module for BIPV applications. The solar module junction box may include: a mounting housing 1, a state detection module 2, a controller 3, and a power module 4.

In an exemplary embodiment, the state detection module 2, controller 3 and power module 4 are all installed in the mounting housing 1; the mounting housing 1 has two inputs and two outputs; the two inputs of the mounting housing 1 are connected to two outputs of a solar module 5; the two outputs of the mounting housing 1 are connected to two outputs of the power module 4 for outputting power; the state detection module 2 is connected to the controller 3, and the controller 3 is connected to the power module 4.

In an exemplary embodiment, the power module 4 is, for example, a DC/DC power module.

In an exemplary embodiment, the two outputs of the mounting housing 1 may be connected to an inverter 6 such that the inverter 6 outputs AC current.

The signal flow direction or data flow direction of the solar module junction box 100 disclosed in this embodiment is described as follows:
The state detection module 2 detects a state of the solar module 5 and transmits the state detection data to the controller 3. The controller 3 acquires the state detection data, generates a switch-off control signal when the state detection data is abnormal, and transmits the switch-off control signal to the power module 4. After receiving the switch-off control signal, the power module 4 adjusts the output voltage to be within a preset low voltage range.

In an exemplary embodiment, the state of the solar module junction box 100 is specifically a state related to operation of the solar module junction box 100, including temperature, current, and/or voltage, etc.

In an exemplary embodiment, the state detection module 2 detects a state of the solar module 5, the state of the solar module 5 including temperature, current, and/or voltage, etc. The solar module junction box 100 may be mounted on the back of the solar module 5.

In an exemplary embodiment, after acquiring the state detection data, the controller 3 determines whether the state detection data is abnormal or not. The determination is as, for example, comparing the state detection data with a preset state threshold, if the state detection data is greater than the preset state threshold, it is determined that the state detection data is abnormal. The comparing function may be realized through a comparison circuit.

In an exemplary embodiment, the preset state threshold is a critical value corresponding to normal operation of the solar module 5. When the state detection data exceeds the critical value, the state detection data is abnormal. After the controller 3 acquires the state detection data, it can be determined whether the state detection data is abnormal by comparing the acquired state detection data with the preset state threshold. The comparing function may be realized through a comparison circuit, that is, a comparison circuit is provided in the controller 3. Since comparison circuit is a mature technology, the description thereof will be omitted herein in the present embodiment.

In an exemplary embodiment, after the controller 3 acquires the state detection data, if it is determined that the state detection data is abnormal, then the solar module 5 is in an abnormal environment such as fire, natural disaster or other environments that may cause damage to the solar module 5, thus the controller 3 generates a switch-off control signal for switching off the solar module 5.

In an exemplary embodiment, the controller 3 generates a switch-off control signal, which can control the power module 4 to adjust its own output voltage to be within a preset low voltage range. That is, after the power module 4 receives the switch-off control signal, the output voltage of the power module 4 is adjusted to be within a preset low voltage range.

In an exemplary embodiment, the switch-off control signal is, for example, a PWM (Pulse Width Modulation) duty cycle configuration signal, which may control the power module 4 to adjust the PWM duty cycle so as to control the output voltage of the power module 4 to be within a preset low voltage range.

In an exemplary embodiment, the preset low voltage range is, for example, 0 V to 24 V, belonging to human safety voltage, and the PWM duty cycle configured by the PWM duty cycle configuration signal is in a PWM duty cycle range corresponding to the preset low voltage range. In an exemplary embodiment, the duty cycle configured by the PWM duty cycle configuration signal is a PWM duty cycle corresponding to 0 V.

As described above, according to the solar module junction box 100 disclosed in this embodiment, the state of the solar module 5 is detected through the state detection module 2, and the controller 3 can determine whether the solar module 5 needs to be switched off according to the state, transmit the switch-off control signal to the power module 4 when it is determined that the solar module 5 needs to be switched off, and control the power module 4 to adjust the output voltage to be within the low voltage range. Since the output of the power module 4 is connected to the output of the solar module junction box 100, the output voltage of the solar module junction box 100 is within a low voltage range, such that safe switch-off of the solar module is achieved and personnel safety is ensured.

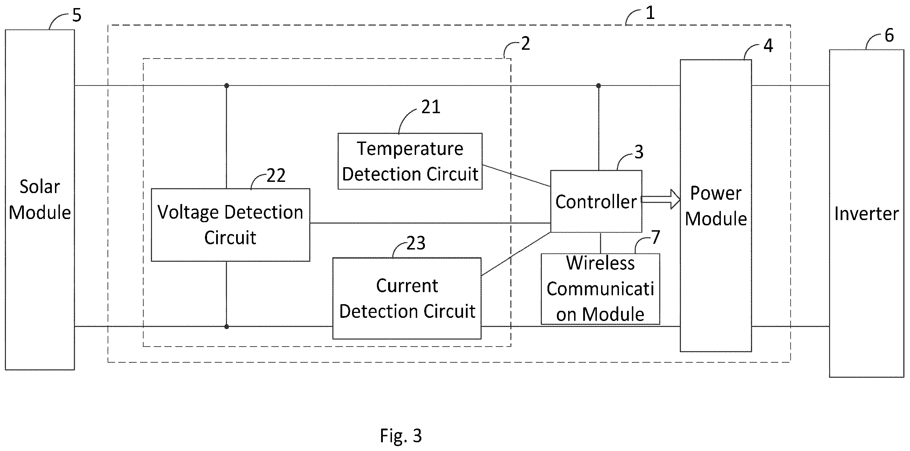

FIG. 3 shows a structural block diagram of a solar module junction box 100 according to an exemplary embodiment of the present application. Compared to the solar module junction box 100 shown in FIG. 2, the solar module junction box 100 shown in FIG. 3 may further include a wireless communication module 7.

In an exemplary embodiment, the wireless communication module 7 is installed in the mounting housing 1 and is connected to the controller 3.

In an exemplary embodiment, after the controller 3 receives a remote switch-off control instruction through the wireless communication module 7, the controller 3 generates a switch-off control signal and transmits the switch-off control signal to the power module 4. After receiving the switch-off control signal, the power module 4 adjusts the output voltage to be within a preset low voltage range.

In an exemplary embodiment, the controller 3 may be wirelessly connected to the solar controller 9 through the wireless communication module 7 such that the controller 3 can wirelessly receive the remote switch-off control instruction transmitted from the solar controller 9 through the wireless communication module 7, and the remote switch-off control instruction is transmitted from the solar controller 9 through operation of a skilled person.

In an exemplary embodiment, the controller 3 may also be wirelessly connected to a user equipment (UE) via the wireless communication module 7. The UE is, for example, a smart phone, such that the controller 3 can wirelessly receive the remote switch-off control instruction transmitted by the UE through the wireless communication module 7.

In an exemplary embodiment, the controller 3 generates a switch-off control signal either after receiving the remote switch-off control instruction or when the state detection data is acquired and the state detection data is abnormal.

The respective state detection circuits included in the state detection module 2 in FIG. 2 are specifically described as follows.

In an exemplary embodiment, the state detection module 2 includes a temperature detection circuit 21, which detects a temperature in the solar module junction box 100, and transmits the detected temperature data to the controller 3. The controller 3 acquires the temperature data, generates the switch-off control signal when the temperature data is abnormal, and transmits the switch-off control signal to the power module 4.

In an exemplary embodiment, the state detection module 2 may include a voltage detection circuit 22, which detects the voltage between two inputs of the mounting housing 1 (equivalent to detecting the voltage output by the solar module 5), and transmits the detected voltage data to the controller 3. The controller 3 acquires the voltage data, generates the switch-off control signal when the voltage data is abnormal, and transmits the switch-off control signal to the power module 4.

In an exemplary embodiment, the state detection module 2 may include a current detection circuit 23, which detects a current of any input of the mounting housing 1 (equivalent to detecting the current output by the solar module 5), and transmits the detected current data to the controller 3. The controller 3 acquires the current data, generates the switch-off control signal when the current data is abnormal, and transmits the switch-off control signal to the power module 4.

In an exemplary embodiment, after the controller 3 acquires the temperature data, it is determined whether the temperature data is abnormal or not. The determination is as, for example, comparing the temperature data with a preset temperature threshold, if the temperature data is greater than the preset temperature threshold, it is determined that the temperature data is abnormal. The comparing function may be realized through a comparison circuit.

In an exemplary embodiment, after the controller 3 acquires the voltage data, it is determined whether the voltage data is abnormal or not. The determination is as, for example, comparing the voltage data with a preset voltage threshold, if the voltage data is greater than the preset voltage threshold, it is determined that the voltage data is abnormal. The comparing function may be realized through a comparison circuit.

In an exemplary embodiment, after the controller 3 acquires the current data, it is determined whether the current data is abnormal or not. The determination is as, for example, comparing the current data with a preset current threshold, if the current data is greater than the preset current threshold, it is determined that the current data is abnormal. The comparing function may be realized through a comparison circuit.

In an exemplary embodiment, the state detection module 2 may include any one of the temperature detection circuit 21, the voltage detection circuit 22, and the current detection circuit 23 or a combination thereof; the controller 3 generates the switch-off control signal when receiving any one of an abnormal temperature data, an abnormal voltage data, and an abnormal current data, or the combination thereof.

In an exemplary embodiment, the preset temperature threshold, the present voltage threshold and the preset current threshold are all critical values corresponding to normal operation of the solar module 5, exceeding the critical values indicates that the solar module 5 is abnormal. The specific values of the preset temperature threshold, the present voltage threshold and the preset current threshold are determined according to the performance of the solar module 5, which are not limited here in this embodiment.

In an exemplary embodiment, the temperature detection circuit 21 may also be arranged on the back of the solar module 5 to directly detect the temperature of the solar module 5, and may also be arranged within a preset range around the solar module 5 to detect an ambient temperature of the solar module 5.

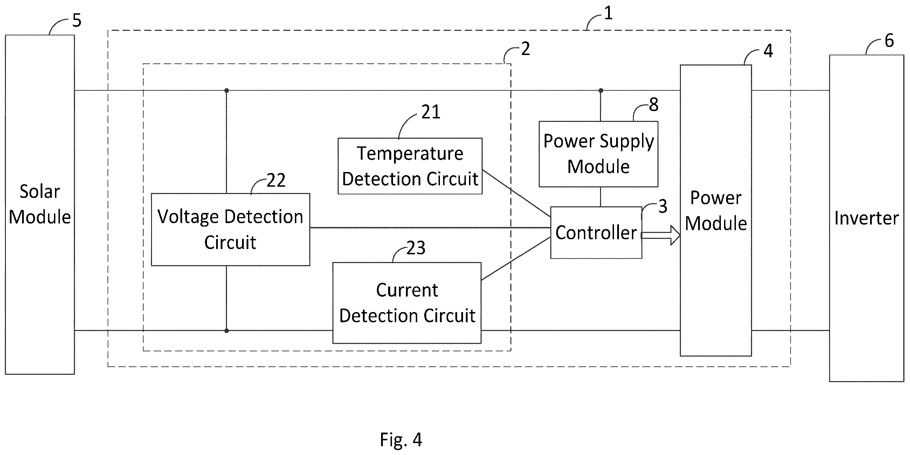

FIG. 4 shows a structural block diagram of a solar module junction box 100 according to an exemplary embodiment of the present application. Compared to the solar module junction box 100 shown in FIG. 2, the solar module junction box 100 shown in FIG. 4 may further include a power supply module 8.

In an exemplary embodiment, the power supply module 8 is mounted in the mounting housing 1 for acquiring a power output by the solar module 5 and supplying power to the controller 3.

In an exemplary embodiment, the power supply module 8 may also supply power to the respective state detection circuits included in the state detection module 2.

In the second exemplary embodiment, the present disclosure also provides a solar system 200 that may include:
at least one solar controller 9 and a plurality of solar module junction boxes 100 according to the first exemplary embodiment; different solar module junction boxes 100 connect different solar modules, that is , the solar module junction boxes 100 are connected to the solar modules 5 in a one-to-one correspondence.

In an exemplary embodiment, the solar system 200 has a two-layer structure, with the lower layer being a solar module junction box 100 and the upper layer being a solar controller 9.

In an exemplary embodiment, the solar module junction boxes are connected to the solar controller 9 in a wired manner, and the number of solar module junction boxes connected to each solar controller 9 does not exceed a preset number corresponding to the wired manner.

In an exemplary embodiment, the solar module junction boxes 100 are connected to the solar controller 9 in a wireless manner, and the number of solar module junction boxes 100 connected to each solar controller 9 does not exceed a preset number corresponding to the wireless manner.

In an exemplary embodiment, the function of the solar controller 9 may follow the function of the existing solar controller, which will not be described here.

In an exemplary embodiment, the solar system 200 limits the number of solar module junction boxes 100 according to different connection manners. Specifically, when the solar module junction boxes 100 are connected to the solar controller 9 in a wired manner, the number of the solar module junction boxes 100 connected to each solar controller 9 does not exceed a preset number corresponding to the wired manner. When the solar module junction boxes 100 are connected to the solar controller 9 in a wireless manner, the number of the solar module junction boxes 100 connected to each solar controller 9 does not exceed a preset number corresponding to the wireless manner.

In an exemplary embodiment, different wired manners correspond to different preset numbers, and different wireless manners correspond to different preset numbers.

In an exemplary embodiment, if the wired manner is RS485 mode, the preset number corresponding to the RS485 mode is, for example, any number within the range of 60 to 80. The specific value of the preset number corresponding to the RS485 mode is limited by the communication capability using the RS485 mode. The preset number corresponding to the RS485 mode may be determined according to actual situations.

In an exemplary embodiment, if the wired mode is power carrier mode, the preset number corresponding to the power carrier mode is, for example, any number within the range of 20 to 50. The specific value of the preset number corresponding to the power carrier mode is limited by the power line layout, the number of junction boxes that can be connected in series by the power line and the capacity of the inverter, where the capacity of the inverter is the number of solar module junction boxes 100 connected to the inverter.

In an exemplary embodiment, the preset number corresponding to the wireless manner is, for example, 500, and the preset number corresponding to the wireless manner is limited by the coverage and wireless access quantity corresponding to different wireless manners.

In the third exemplary embodiment, the present disclosure also provides a solar system 200 that may include: at least one solar controller 9 and a plurality of gateways; each gateway connects the solar controller 9 in a wired and/or wireless manner.

In an exemplary embodiment, the solar system 200 has a three-layer structure with the lower layer being a solar module junction box, the intermediate layer being a gateway, and the upper layer being a solar controller.

In an exemplary embodiment, each gateway connects a plurality of solar module junction boxes 100 according to the first exemplary embodiment in the wired manner. Different solar module junction boxes 100 connect different solar modules 5, and the number of solar module junction boxes 100 connected by each gateway does not exceed the wired connection capacity of the gateway, which is also the maximum number of solar module junction boxes 100 that are connected by the gateway in the wired manner.

In an exemplary embodiment, each gateway connects a plurality of solar module junction boxes 100 according to the first exemplary embodiment in a wireless manner. Different solar module junction boxes 100 connect different solar modules 5, and the number of solar module junction boxes 100 connected by each gateway does not exceed the wireless connection capacity of the gateway, which is also the maximum number of solar module junction boxes 100 that are connected by the gateway in the wireless manner.

In an exemplary embodiment, if the wired manner is power carrier mode, all the solar module junction boxes 100 connected to the same inverter 6 are connected to the same gateway through the power carrier mode (e.g. power line).

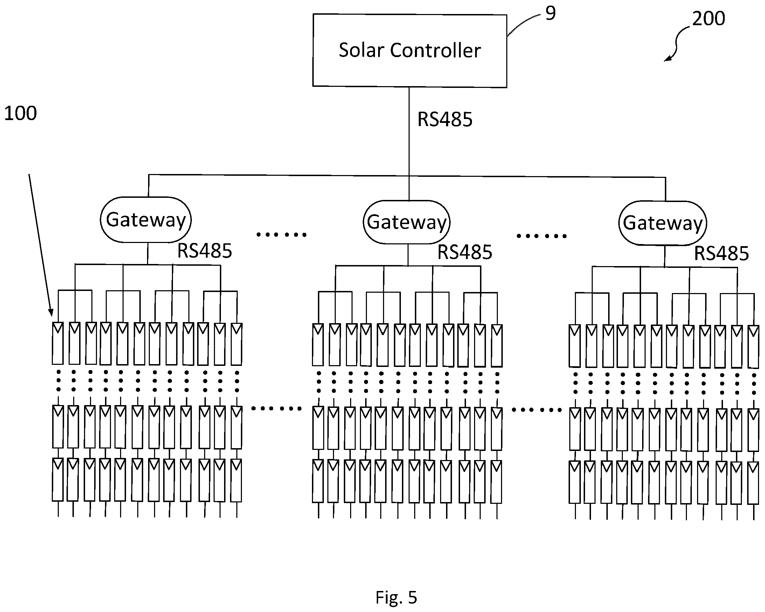

The solar system 200 is specifically described herein below with reference to FIG. 5 to FIG. 7. The solar system 200 may be divided into a two-layer structure and a three-layer structure according to the number of the solar module junction boxes 100.

If the number of the solar module junction boxes 100 does not exceed the preset number corresponding to the wired manner, the two-layer wired structure according to the second exemplary embodiment is used, for example, the solar module junction boxes 100 communicate with the solar controller 9 in a wired manner such as RS485 mode and power carrier mode.

If the number of the solar module junction boxes 100 does not exceed the preset number corresponding to the wireless mode, the two-layer wireless structure according to the second exemplary embodiment is used, for example, the solar module junction boxes 100 communicate with the solar controller 9 in a wireless manner such as ZigBee and Bluetooth.

If the number of the solar module junction boxes 100 exceeds the preset number corresponding to the wired manner and the preset number corresponding to the wireless mode, the three-layer structure according to the third exemplary embodiment is used. The three-layer solar system includes three typical communication architecture schemes: wired scheme, wireless scheme, and wired/wireless hybrid scheme.

In the wired scheme: RS485 or power carrier mode is used. Specifically, as shown in FIG. 5, each hundred or so of solar module junction boxes are connected to a gateway using RS485, and the number of solar module junction boxes connected by a gateway may also be adjusted according to the actual environment. When using power carrier for communication, the number of gateways may be configured according to the number of inverters. All solar module junction boxes connected by an inverter may use the same gateway, which may be further connected to a solar controller through the wired manner such as RS485, so as to achieve communication connection of the entire solar system.

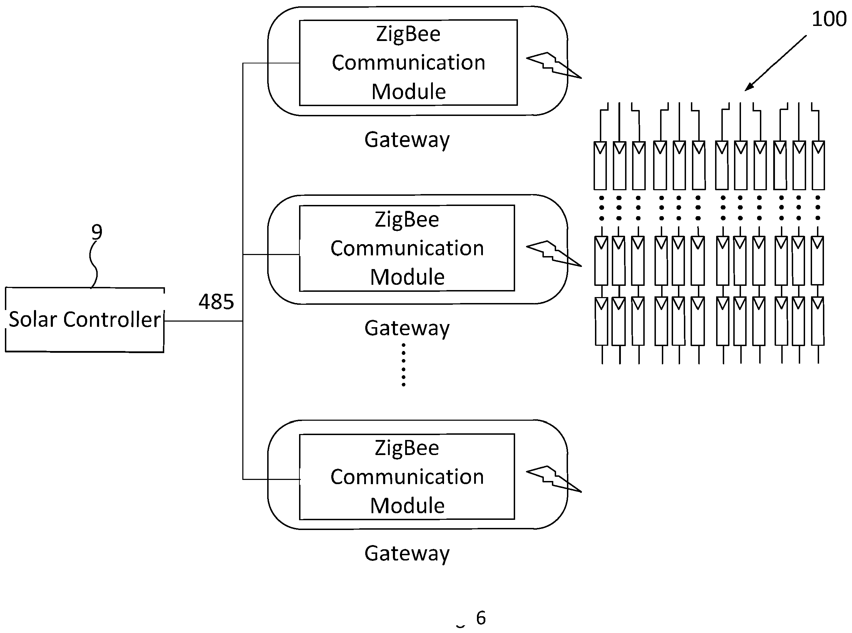

In the wireless scheme: ZigBee plus LoRa or NB-IoT is used. Specifically, as shown in FIG. 6, dozens of or about a hundred of solar module junction boxes constitute a ZigBee network. Each ZigBee network is provided with a gateway that is composed of a LoRa module and a ZigBee communication module. The LoRa module and the ZigBee communication module are connected through a serial port, wherein the ZigBee communication module may be cc2530 chip or cc2538 chip. The gateway is responsible for wireless communication with the respective solar module junction boxes. There are two manners of LoRa module communication: the first one uses LoRaWAN, which is a set of communication protocols and system architectures designed for long-distance communication networks, having the characteristics of small size, low power consumption, long transmission distance, and strong anti-interference ability, etc. The antenna gain may be adjusted according to the actual application. LoRaWAN is a typical star topology. In this network architecture, the solar controller is a transparent relay connecting the LoRa module and the solar server (which is not shown in the figure, and the solar server is the solar server included in the server layer in FIG. 1). The solar controller and the solar server are connected via standard IP (Internet Protocol). The solar controller and the LoRa module are networked into a star network. The solar controller can achieve multi-channel parallel reception while processing multiplexed signals. The communication between all LoRa modules and solar controllers is two-way communication, which increases the network capacity. The second manner uses peer-to-peer polling to form a network, but the peer-to-peer polling has a much lower efficiency than the star network. The advantage of using peer-to-peer polling to form a network is that it can be easily realized in terms of communication protocol and system and the development and engineering cost thereof is relatively low. Thus this manner is quite suitable for a project where a comparatively small number of solar module junction boxes are involved. Generally, the peer-to-peer polling between the solar controller and the gateway can be used to form a network in a project having less than 500 junction boxes.

In addition, NB-IoT is an emerging technology in the field of Internet of Things (IoT), which supports cellular data connection of low-power devices in wide area network, that is, low-power wide area network (LPWAN). NB-IoT is built on a cellular network and may be deployed directly on GSM networks, UMTS networks, or LTE networks. The NB-IoT module can directly replace the functions of the LoRa module and the solar controller in the wireless scheme. Therefore, data communication between the solar module junction boxes and the server can be realized through a two-layer wireless network.

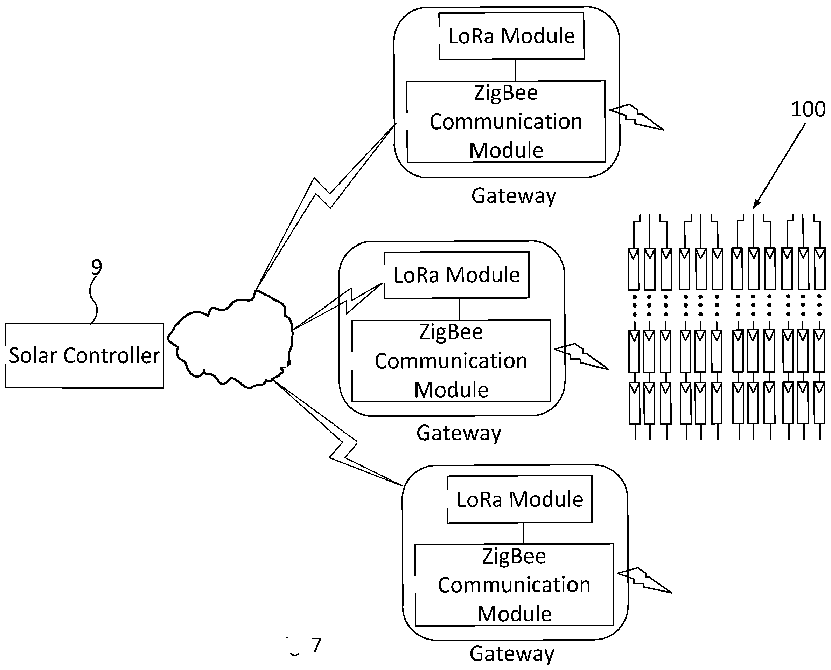

The wired/wireless hybrid scheme is a combination of RS485 and ZigBee, or a combination of power carrier and LoRa. Specifically, as shown in FIG. 7, the communication architecture of the RS485 plus ZigBee communication module is adopted, wherein the ZigBee communication module may be a cc2530 chip or a cc2538 chip. The gateway shown in FIG. 7 also includes a serial port to RS485 interface (not shown in FIG. 7), which facilitates connection between the RS485 and ZigBee communication module. The advantage of the wired/wireless hybrid scheme is to combine the reliability of the wired mode with the convenience of the wireless mode to achieve the optimal design of the entire network performance.

Of the schemes described above, when the wired mode such as RS485 or power carrier is adopted, the technology is mature and the reliability is high. When ZigBee wireless communication is adopted, the construction is convenient in networking the solar module junction box and the gateway, where no additional cables are needed, and a combinative scheme may also be selected according to the actual situation of the project. In some projects, the solar module junction boxes and the solar modules are separated from each other for an aesthetic appearance, so that the solar module junction boxes are hidden in the metal frame of the solar module easily. Such installation would shield the wireless signal. Thus it is necessary to adopt the wired scheme such as RS485 and power carrier to place the cable in the frame, which will not affect the appearance while achieving reliable communication.

In specific applications, CAN bus may be used to replace the wired scheme of RS485 or power carrier. The CAN bus scheme can achieve the above communication functions in the networking size and distance as mentioned in the embodiment. The main difficulty lies in the software and the hardware cost is slightly high as compared to RS485.

In specific applications, a Bluetooth mesh network can be used to replace the ZigBee networking scheme. This networking scheme is not inferior to the ZigBee networking scheme that does not have power amplifiers both in the number of networks and distance. The wireless communication between the gateway and the controller can use 433MHz wireless communication technology, which can achieve a communication distance of hundreds of meters and a transmission rate generally not lower than that of LORA and NB-IoT. The main disadvantage is that the power consumption of this communication is higher than that of LORA and NB-IoT.

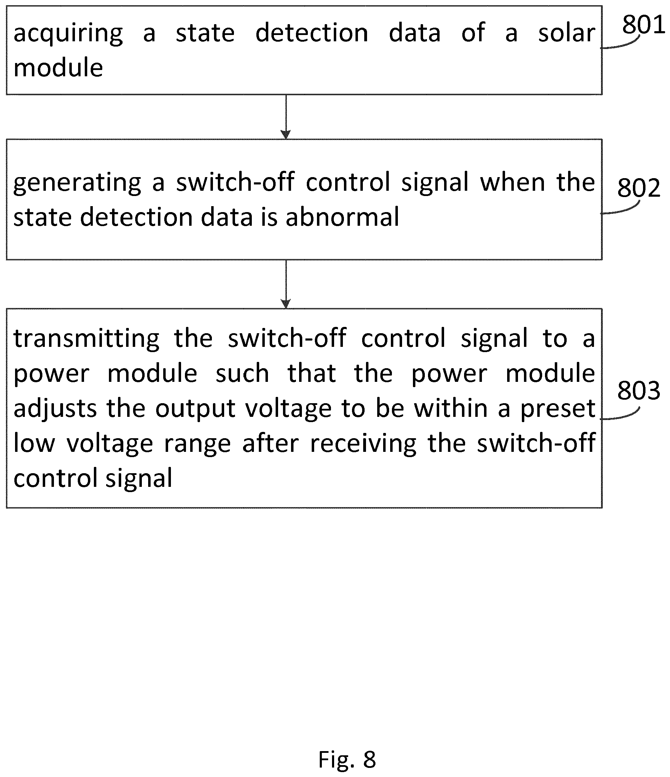

In the fourth exemplary embodiment, as shown in FIG. 8, the present application provides a control method for solar module. The method is performed by the solar module junction box according to the first exemplary embodiment. The method may include step 801 to step 803:
Step 801: acquiring a state detection data of the solar module;
Step 802: generating a switch-off control signal when the state detection data is abnormal;
Step 803: transmitting the switch-off control signal to the power module, such that the power module adjusts the output voltage to be within a preset low voltage range after receiving the switch-off control signal.

In an exemplary embodiment, the Step 802 includes:
the state detection data being temperature data, generating the switch-off control signal when the temperature data is abnormal;
and/or
the state detection data being a voltage data output by the solar module, generating the switch-off control signal when the voltage data is abnormal;
and/or
the state detection data being a current data output by the solar module, generating the switch-off control signal when the current data is abnormal.

In an exemplary embodiment, when the state detection data includes temperature data, voltage data, and current data, the switch-off control signal is generated whenever any one of the temperature data, the voltage data, and the current data is abnormal.

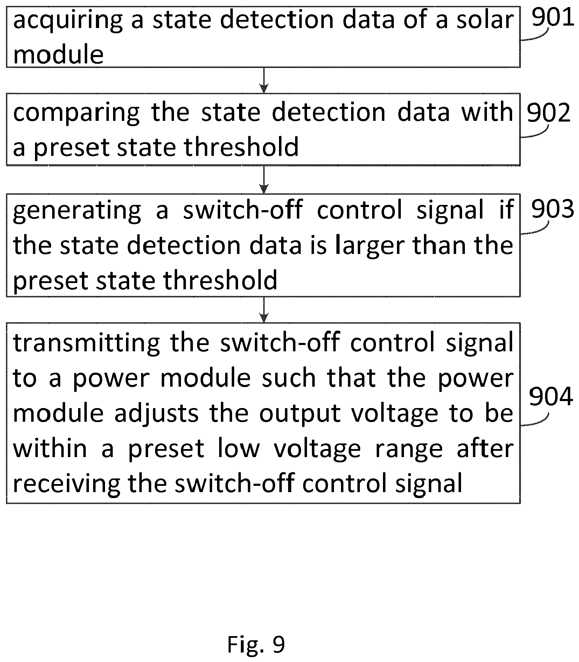

As shown in FIG. 9, the present disclosure provides another control method for solar module. The method is performed by the solar module junction box according to the first exemplary embodiment. The method may include Step 901 to Step 904.
Step 901: acquiring the state detection data of the solar module;
Step 902: comparing the state detection data with a preset state threshold;
Step 903: generating the switch-off control signal if the state detection data is greater than the preset state threshold;
Step 904: transmitting the switch-off control signal to the power module, such that the power module adjusts the output voltage to be within a preset low voltage range after receiving the switch-off control signal.

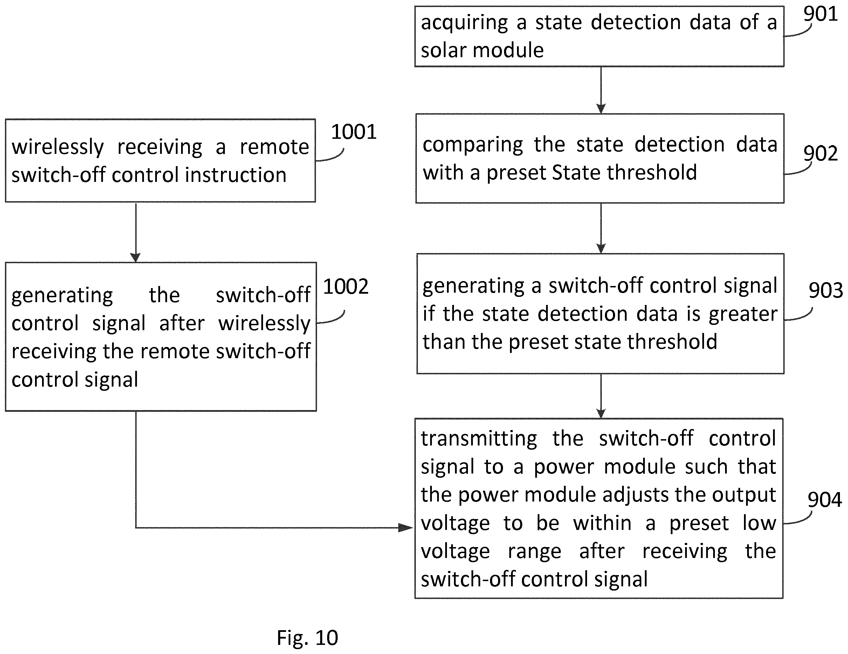

As shown in FIG. 10, the present disclosure provides yet another control method for solar module, which further includes Step 1001 and Step 1002 in addition to Step 901 to Step 904 as shown in FIG. 9:
Step 1001: wirelessly receiving the remote switch-off control instruction;
Step 1002: generating the switch-off control signal after wirelessly receiving the remote switch-off control signal.

In an exemplary embodiment, after the switch-off control signal is generated in Step 1002, Step 904 is performed.

In an exemplary embodiment, after receiving any switch-off control signal generated in Step 1002 and Step 903, the power module will adjust the output voltage to be within the low voltage range.

In an exemplary embodiment, the state detection data and the preset state threshold are compared in Step 902; and in Step 903, the switch-off control signal is generated when the state detection data is greater than the preset state threshold, which is specifically realized by the following steps:
the state detection data being a temperature data, comparing the temperature data with a preset temperature threshold; generating a switch-off control signal if the temperature data is greater than the preset temperature threshold;
and/or
the state detection data being a voltage data output by the solar module, comparing the voltage data with a preset voltage threshold; generating the switch-off control signal if the voltage data is greater than the preset voltage threshold;
and/or
the state detection date being a current data output by the solar module, comparing the current data with a preset current threshold; generating the switch-off control signal if the current data is greater than the preset current threshold.

In an exemplary embodiment, the low voltage range is 0 V to 24 V.

The control method for solar module disclosed in the above exemplary embodiments is performed by the solar module junction box according to the first exemplary embodiment. To avoid repetition, for specific description and effect, please refer to the first exemplary embodiment, and which will not be described here.

According to the above exemplary embodiments of the present application, the state of the solar module junction box is detected through the state detection module, and the controller can determine whether the solar module needs to be switched off according to the state and transmit the switch-off control signal to the power module when it is determined that the solar module needs to be switched off. A power module is controlled to adjust the output voltage to be within the low voltage range, such that the output voltage of the solar module junction box is within the low voltage range, whereby safe switch-off of the solar module is achieved and personnel safety is ensured.

It should be noted that the terms such as "include", "including", "comprise" and "comprising" used herein are intended to represent non-exclusive inclusions. The forgoing is merely preferred embodiments of the present invention and is not intended to limit the scope of the present invention, and any equivalent structures or equivalent flow variations made by using the description and accompanying drawings of the present invention are applied directly or indirectly in other relevant technical fields, which is included in the scope of the present invention.

## Claims

1. A solar module junction box (100) comprising:
a state detection module (2), a controller (3) and a power module (4);
wherein the state detection module (2) is connected to the controller (3), the controller (3) is connected to the power module (4);
wherein the state detection module (2) is configured to detect a state of a solar module (5) and transmit a state detection data to the controller (3); the controller (3) is configured to acquire the state detection data, generate a switch-off control signal when the state detection data is abnormal, and transmit the switch-off control signal to the power module (4); the power module (4) is configured to adjust an output voltage to be within a preset low voltage range after receiving the switch-off control signal.

2. The solar module junction box according to claim 1, wherein
the controller (3) is configured to, after acquiring the state detection data, compare the state detection data with a preset state threshold, and generate the switch-off control signal if the state detection data is greater than the preset state threshold.

3. The solar module junction box according to claim 1 or 2, wherein
the solar module junction box (100) further comprises: a wireless communication module (7) connected to the controller (3);
wherein the controller (3) is configured to, after receiving a remote switch-off control instruction through the wireless communication module (7), generate the switch-off control signal and transmit the switch-off control signal to the power module (4).

4. The solar module junction box according to any one of claims 1 to 3, wherein the state detection module (2) comprises one or more of following circuits: a temperature detection circuit (21), a voltage detection circuit (22) and a current detection circuit (23);
wherein the temperature detection circuit (21) is configured to detect a temperature of the solar module (5) and transmit the detected temperature data to the controller (3), the controller (3) is configured to acquire the temperature data, generate the switch-off control signal when the temperature data is abnormal, and transmit the switch-off control signal to the power module (4);
wherein the voltage detection circuit (22) is configured to detect a voltage output by the solar module (5) and transmit the detected voltage data to the controller (3), the controller (3) is configured to acquire the voltage data, generate the switch-off control signal when the voltage data is abnormal, and transmit the switch-off control signal to the power module (4);
wherein the current detection circuit (23) is configured to detect a current output by the solar module (5) and transmit the detected current data to the controller (3), the controller (3) is configured to acquire the current data, generate the switch-off control signal when the current data is abnormal, and transmit the switch-off control signal to the power module (4).

5. The solar module junction box according to claim 4, wherein
the controller (3) is configured to, after acquiring the temperature data, compare the temperature data with a preset temperature threshold, and generate the switch-off control signal if the temperature data is greater than the preset temperature threshold;
the controller (3) is configured to, after acquiring the voltage data, compare the voltage data with a preset voltage threshold, and generate the switch-off control signal if the voltage data is greater than the preset voltage threshold; and
the controller (3) is configured to, after acquiring the current data, compare the current data with a preset current threshold, and generate the switch-off control signal if the current data is greater than the preset current threshold.

6. The solar module junction box according to any one of claims 1 to 5, wherein the solar module junction box (100) further comprises: a power supply module (8);
wherein the power supply module (8) is configured to acquire a power output by the solar module and supply power to the controller (3).

7. The solar module junction box according to any one of claims 1 to 6, wherein the low voltage range is from 0 V to 24 V.

8. A solar system (200) comprising:
at least one solar controller (9) and a plurality of solar module junction boxes (100) according to any one of claims 1 to 7, the solar module junction boxes (100) being correspondingly connected to the solar modules (5);
wherein the solar module junction boxes (100) are connected to the solar controller (9) in a wired manner, and the number of solar module junction boxes (100) connected to each solar controller (9) does not exceed a preset number corresponding to the wired manner; and/or
the solar module junction boxes (100) are connected to the solar controller (9) in a wireless manner, and the number of solar module junction boxes (100) connected to each solar controller (9) does not exceed a preset number corresponding to the wireless manner.

9. The solar system (200) according to claim 8, further comprising:
a plurality of gateways, wherein each of the gateways connects the solar controller (9) in a wired and/or wireless manner;
wherein the solar module junction boxes (100) are connected to the solar controller (9) via the respective gateways through the wired manner, and a number of solar module junction boxes (100) connected by each of the gateways does not exceed a wired connection capacity of the gateway; and/or
the solar module junction boxes (100) are connected to the solar controller (9) via the respective gateways through a wireless manner, and a number of solar module junction boxes (100) connected by each of the gateways does not exceed a wireless connection capacity of the gateway.

10. A control method for solar module comprising:
acquiring a state detection data of a solar module (5);
generating a switch-off control signal when the state detection data is abnormal; and
transmitting the switch-off control signal to a power module (4) such that the power module (4) adjusts an output voltage to be within a preset low voltage range after receiving the switch-off control signal.

11. The method according to claim 10, wherein before generating a switch-off control signal, the method further comprises:
comparing the state detection data with a preset state threshold, if the state detection data is greater than a preset state threshold, the state detection signal is abnormal; and
generating the switch-off control signal if the state detection data is greater than a preset state threshold.

12. The method according to claim 10 or 11, wherein the method further comprises:
wirelessly receiving a remote switch-off control instruction; and
generating the switch-off control signal after wirelessly receiving the remote switch-off control instruction.

13. The method according to any one of claims 10 to 12, wherein generating the switch-off control signal comprises:
the state detection data being a temperature data output by the solar module (5), generating the switch-off control signal when the temperature data is abnormal;
and/or
the state detection data being a voltage data output by the solar module (5), generating the switch-off control signal when the voltage data is abnormal;
and/or
the state detection data being a current data output by the solar module (5), generating the switch-off control signal when the current data is abnormal.

14. The method according to claim 11, wherein comparing the state detection data with the preset state threshold and generating the switch-off control signal comprise:
the state detection data being a temperature data output by the solar module (5), comparing the temperature data with a preset temperature threshold; generating the switch-off control signal if the temperature data is greater than the preset temperature threshold;
and/or
the state detection data being a voltage data output by the solar module (5), comparing the voltage data with a preset voltage threshold; generating the switch-off control signal if the voltage data is greater than the preset voltage threshold;
and/or
the state detection date being a current data output by the solar module (5), comparing the current data with a preset current threshold; generating the switch-off control signal if the current data is greater than the preset current threshold.

15. The method according to any one of claims 10 to 14, wherein the low voltage range is from 0 V to 24 V.
